(19)

Europäisches
Patentamt
European
Patent Office
Office européen
des brevets

(11) **EP 4 431 569 A1**

(12) **EUROPEAN PATENT APPLICATION**
published in accordance with Art. 153(4) EPC

(43) Date of publication:
**18.09.2024 Bulletin 2024/38**

(21) Application number: **21963481.3**

(22) Date of filing: **10.11.2021**

(51) International Patent Classification (IPC):
**C08L 97/02** *(2006.01)* **C08L 1/26** *(2006.01)*
**C08L 5/14** *(2006.01)*

(52) Cooperative Patent Classification (CPC):
**C08L 1/26; C08L 5/14; C08L 97/02**

(86) International application number:
**PCT/JP2021/041399**

(87) International publication number:
**WO 2023/084650 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Daicel Corporation
Osaka-shi, Osaka 530-0011 (JP)**
• **Kyoto University
Kyoto-shi, Kyoto 606-8501 (JP)**

(72) Inventors:
• **KAMITAKAHARA, Hiroshi
Kyoto-shi, Kyoto 606-8501 (JP)**
• **KITAYAMA, Kenji
Tokyo 108-8230 (JP)**
• **MIYAUCHI, Yu
Kyoto-shi, Kyoto 606-8501 (JP)**

(74) Representative: **Hoffmann Eitle
Patent- und Rechtsanwälte PartmbB
Arabellastraße 30
81925 München (DE)**

(54) **LIGNOCELLULOSE DERIVATIVE COMPOSITION AND METHOD FOR PRODUCING SAME**

(57) A composition containing a lignocellulose derivative contains at least one of the group consisting of a compound containing lignin and a compound containing hemicellulose. The composition may further contain a cellulose derivative in which some or all of hydroxyl groups in cellulose are etherified with an alkyl group having 2 or more carbons. A method for producing the composition includes subjecting a biomass as a raw material containing lignocellulose to an alkali treatment in a solvent; alkylating the lignocellulose by adding an alkylating agent to the alkali-treated biomass as a raw material; and fractionating the alkylated biomass as a raw material. The alkylating agent is an alkyl halide having 2 or more carbons.

FIG. 1

Processed by Luminess, 75001 PARIS (FR)

EP 4 431 569 A1

**Description**

Technical Field

The present disclosure relates to a composition containing a lignocellulose derivative and a method for producing the composition. Further, the present disclosure relates to a molded body containing the composition containing a lignocellulose derivative.

Background Art

A cellulose derivative is known to exhibit various physical properties depending on a substituent to be introduced, a molecular weight, and the like. By use of its physical properties, it is used in various fields such as films, fibers, paints, foods, medicines, and cosmetics.

In recent years, there has been a demand for development of materials derived from biomass resources in place of materials derived from petroleum resources due to increased concern on environmental problems. In particular, there has been a demand for utilization of a woody biomass that does not compete with food and does not increase carbon dioxide in the atmosphere.

Cellulose is a biological resource abundantly contained in a woody biomass such as wood. A method for producing a cellulose derivative by a chemical reaction using pulp obtained from wood as a raw material cellulose has been proposed in the related art.

For example, cellulose ethers in which an alkyl group is introduced into a hydroxyl group in cellulose can be obtained by reacting alkali cellulose treated under alkaline conditions with various alkylating agents. In Patent Document 1 (JP 2008-500426 T), a specific method for producing ethyl cellulose described in "Ullmann's Encyclopedia of Industrial Chemistry" is introduced as a known art.

The chemical reaction used in the known art introduced in Patent Document 1 requires a cellulose raw material such as kraft pulp having high purity. However, cellulose in a woody biomass is usually present as lignocellulose having a higher-order structure that is intricately intertwined with lignin and hemicellulose. compounds containing hemicellulose. Specifically, celluloses, which are linear polymers, form crystal structures by intramolecular and intermolecular hydrogen bonds and constitute strong microfibrils, which are intertwined with hemicelluloses such as xylan and glucomannan. Further, lignin, which is an irregular aromatic polymer, is charged into voids in matrixes of these polysaccharides, thereby forming strong composites. A complicated pulping process is required for obtaining a high-purity cellulose raw material from such a woody biomass. The production method introduced in Patent Document 1 has a problem of a high environmental load caused by the raw material. In addition, there is a problem that lignin and hemicellulose are removed in a process of obtaining a cellulose raw material from a woody biomass, and thus the whole biomass is not utilized.

Non-Patent Literature 1 (Green Chem., 2020, 22, 2909-2928) describes a method for producing methylated cellulose, lignin, and hemicellulose by methylating softwood sawdust in a solvent using a methylating agent.

Citation List

Patent Document

Patent Document 1: JP 2008-500426 T

Non-Patent Literature

Non-Patent Literature 1: Green Chem., 2020, 22, 2909-2928

Summary of Invention

Technical Problem

Since the cellulose derivative of Non-Patent Literature 1 is etherified with a methylating agent, good thermoformability cannot be achieved, and application of the cellulose derivative as a material is limitedly developed. In addition, according to the findings of the inventors of the present disclosure, under the reaction conditions of Non-Patent Literature 1, even when the methylating agent is replaced with another alkylating agent, a compounds having high molecular weight product cannot be obtained, and it is difficult to apply the reaction conditions to a molded body.

An object of the present disclosure is to provide various lignocellulose derivatives obtained from cellulose, hemicellulose, and lignin in a woody biomass, in particular to provide lignocellulose derivatives suitable for thermoforming.

Another object of the present disclosure is to provide a method for producing a lignocellulose derivative having excellent physical properties in a single step using a woody biomass as a raw material without undergoing a pulping process having a high environmental load.

Solution to Problem

A composition containing a lignocellulose derivative according to the present disclosure includes at least one of the group consisting of a compound containing lignin and a compound containing hemicellulose. The composition may further contain a cellulose derivative in which some or all of hydroxyl groups in cellulose are etherified with an alkyl group having 2 or more carbons. The compound containing lignin is lignin, or a lignin derivative in which some or all of hydroxyl groups in lignin are etherified with an alkyl group having 2 or more carbons. The compound containing hemicellulose is hemicellulose, or a hemicellulose derivative in which some or all of hydroxyl groups in hemicellulose are etherified with an alkyl group having 2 or more carbons.

The composition containing a lignocellulose derivative may contain the compound containing lignin in a proportion of more than 0% and 50% or less in all constituent components. The composition containing a lignocellulose derivative may contain the compound containing hemicellulose in a proportion of from 65% to 95% in all the constituent components.

In the composition containing a lignocellulose derivative of the present disclosure, the alkyl group may be an ethyl group.

The composition containing a lignocellulose derivative of the present disclosure may have a number average molecular weight Mn of 30000 or more, a weight average molecular weight Mw of 60000 or more, and a molecular weight distribution Mw/Mn of from 1.0 to 7.0, as measured by gel permeation chromatography.

The composition containing a lignocellulose derivative of the present disclosure may have a glass transition temperature of 120°C or lower and a melting point of 250°C or higher as determined by differential scanning calorimetry.

The composition containing a lignocellulose derivative of the present disclosure may be any of the following aspects.

(1) A composition containing a lignocellulose derivative, the composition containing a cellulose derivative in which some or all of hydroxyl groups in cellulose are etherified with an alkyl group having 2 or more carbons; and a compound containing lignin, wherein the compound containing lignin is lignin, or a lignin derivative in which some or all of hydroxyl groups in lignin are etherified with an alkyl group having 2 or more carbons; and the composition containing a lignocellulose derivative has a number average molecular weight Mn of from 30000 to 120000 and a weight average molecular weight Mw of from 60000 to 400000 as measured by gel permeation chromatography, and a glass transition temperature of 120°C or lower and a melting point of 250°C or higher as determined by differential scanning calorimetry.

(2) A composition containing a lignocellulose derivative, the composition containing a compound containing lignin and a compound containing hemicellulose, wherein the compound containing lignin is lignin, or a lignin derivative in which some or all of hydroxyl groups in lignin are etherified with an alkyl group having 2 or more carbons; the compound containing hemicellulose is hemicellulose, or a hemicellulose derivative in which some or all of hydroxyl groups in hemicellulose are etherified with an alkyl group having 2 or more carbons; and the composition containing a lignocellulose derivative has a number average molecular weight Mn of from 50000 to 65000 and a weight average molecular weight Mw of from 100000 to 300000 as measured by gel permeation chromatography, and a glass transition temperature of 120°C or lower as determined by differential scanning calorimetry.

(3) A composition containing a lignocellulose derivative, the composition containing a compound containing hemicellulose as a main component, wherein the compound containing hemicellulose is hemicellulose, or a hemicellulose derivative in which some or all of hydroxyl groups in hemicellulose are etherified with an alkyl group having 2 or more carbons; and the composition containing a lignocellulose derivative has a number average molecular weight Mn of from 2000 to 12000 and a weight average molecular weight Mw of from 2500 to 15000 as measured by gel permeation chromatography, and a glass transition temperature of 100°C or lower as determined by differential scanning calorimetry.

A molded body of the present disclosure is formed from the composition containing a lignocellulose derivative described in any of the aforementioned aspects.

A method for producing the composition containing a lignocellulose derivative of the present disclosure includes:

(1) subjecting a biomass as a raw material containing lignocellulose to an alkali treatment in a solvent at a temperature of from 30°C to 60°C for from 10 hours to 45 hours;

(2) alkylating the lignocellulose by adding an alkylating agent to the alkali-treated biomass as a raw material and allowing reaction to proceed at a temperature of from 40°C to 55°C for from 30 hours to 120 hours; and
(3) fractionating the alkylated lignocellulose. The alkylating agent is an alkyl halide having 2 or more carbons. The alkylating agent may be ethyl halide.

Advantageous Effects of Invention

In the composition containing a lignocellulose derivative and the molded body according to the present disclosure, the physical properties of each of the alkylated cellulose derivative, the compound containing lignin, and the compound containing hemicellulose are exhibited depending on the composition. The composition containing a lignocellulose derivative can be applied to various applications including a molded body formed by thermoforming.
The production method of the present disclosure can provide a composition containing a lignocellulose derivative in one step using a woody biomass as a raw material without undergoing a process having a high environmental load. In this production method, lignin and hemicellulose, which have been discarded in the related art, can be effectively utilized as raw materials.

Brief Description of Drawings

FIG. 1 is a flowchart illustrating a method for producing a composition containing a lignocellulose derivative according to an embodiment of the present disclosure.
FIG. 2 is an NMR measurement chart of Composition E1 of FIG. 1.
FIG. 3 is an NMR measurement chart of Composition E2 of FIG. 1.
FIG. 4 is an NMR measurement chart of Composition E3 of FIG. 1.
FIG. 5 is a DSC thermogram of Composition E1 of FIG. 1.
FIG. 6 is a DSC thermogram of Composition E2 of FIG. 1.
FIG. 7 is a DSC thermogram of Composition E3 of FIG. 1.
FIG. 8 is a DSC thermogram of commercially available ethyl cellulose.

Description of Embodiments

One preferred embodiment will next be specifically described with reference to the drawings as appropriate. Each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.
In the present specification, "from X to Y" indicating a range means "X or greater and Y or less". Unless otherwise noted, all test temperatures are room temperature (20°C ± 5°C).

Method for Producing Composition Containing Lignocellulose Derivative

The method for producing a composition containing a lignocellulose derivative according to an embodiment of the present disclosure includes (1) subjecting a biomass as a raw material containing lignocellulose to an alkali treatment in a solvent; (2) alkylating the lignocellulose in the biomass as a raw material by adding an alkylating agent; and (3) fractionating the alkylated lignocellulose. The alkylating agent in this production method is an alkyl halide having 2 or more carbons.
In this production method, the alkali treatment conditions in (1) are set to a temperature of from 30°C to 60°C for from 10 hours to 45 hours, and the alkylation reaction conditions in (2) are set to a temperature of from 40°C to 55°C for from 30 hours to 120 hours. Thus, the production method enables efficient introduction of an alkyl group into the lignocellulose, and can produce a composition containing a lignocellulose derivative in which constituent proportions of the compound containing lignin and the compound containing hemicellulose are proper. Details of the compound containing lignin and the compound containing hemicellulose will be described below.
The production method according to an embodiment of the present disclosure can provide a composition containing a lignocellulose derivative in one step using a woody biomass as a raw material without undergoing a process having a high environmental load. Further, this production method enables effective utilization of lignin and hemicellulose contained in lignocellulose, which have been discarded in the related art.

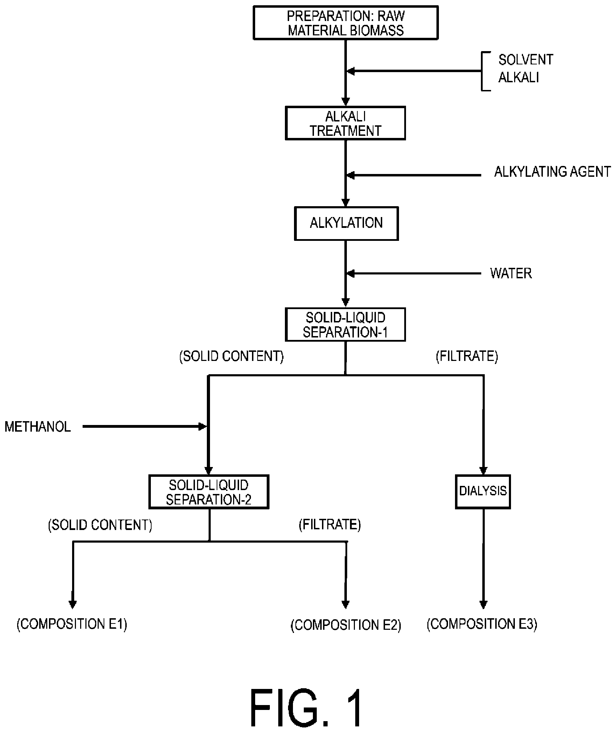

FIG. 1 is a flowchart illustrating a method for producing a composition containing a lignocellulose derivative according to an embodiment of the present disclosure. Hereinafter, the production method according to an embodiment of the present disclosure will be described in more detail with reference to the flowchart of FIG. 1.

Biomass as Raw Material

As illustrated in FIG. 1, in this production method, a biomass containing lignocellulose is provided as a raw material. The biomass containing lignocellulose is not particularly limited, and a woody biomass such as a broad-leaved tree or a coniferous tree or a herbaceous biomass such as rice straw or bran is appropriately selected and used. Here, the lignocellulose means a mixture of natural polymers containing mainly cellulose, hemicellulose, and lignin. Although the contents of cellulose, hemicellulose, and lignin vary depending on the type of biomass selected, the composition thereof is not particularly limited in the production method according to an embodiment of the present disclosure. Two or more types of biomasses containing lignocellulose which are different in composition can be used as raw materials.
The size of the biomass as a raw material is not particularly limited as long as alkali treatment and alkylation in the subsequent steps are possible. From the viewpoint of improving reaction efficiency in the alkali treatment and the alkylation, the biomass as a raw material is preferably finely divided or pulverized. In other words, the production method may include finely dividing or pulverizing the provided biomass as a raw material as a pretreatment. Particles contained in the finely divided or pulverized biomass as a raw material may have a particle size of from 0.10 mm to 3.0 mm, from 0.15 mm to 2.0 mm, from 0.20 mm to 1.0 mm, from 0.25 mm to 0.75 mm, from 0.30 mm to 0.55 mm, or from 0.35 mm to 0.50 mm. The particle size of the finely divided or pulverized biomass as a raw material is measured by a sieve classification method using a JIS standard sieve.
The method for finely dividing or pulverizing the biomass as a raw material is not particularly limited. For example, the biomass as a raw material may be formed into small pieces (chips) using a known cutter or chipper, or may be pulverized using a known pulverizer such as a jaw crusher, a gyratory crusher, a crushing roll, a hammer mill, a roller mill, a cutter mill, a hammer crusher, or a Wiley mill. The biomass as a raw material may be pulverized after being formed into small pieces, or two or more types of pulverizers may be used in combination. From the viewpoint of not inhibiting the alkali treatment and the alkylation, the production method may further include drying the biomass as a raw material formed into small pieces or pulverized.

Alkali treatment

In this production method, a solvent and an alkali are added to the biomass as a raw material described above, and an alkali treatment is performed at a temperature of from 30°C to 60°C for from 10 hours to 45 hours. The alkali treatment under these conditions facilitates introduction of an alkyl group into lignocellulose in the subsequent step. From the viewpoint of promoting the reaction, the alkali treatment may be performed with stirring using a known stirring means.
From the viewpoint that alkylation is promoted in the subsequent step, an alkali treatment temperature in this step is preferably 45°C or higher, and more preferably 50°C or higher. The alkali treatment temperature is preferably 58°C or lower and more preferably 55°C or lower from the viewpoints that thermal decomposition is suppressed and a compound having high molecular weight is obtained. The alkali treatment temperature may be from 30°C to 58°C, from 30°C to 55°C, from 45°C to 60°C, from 45°C to 58°C, from 45°C to 55°C, from 50°C to 60°C, from 50°C to 58°C, or from 50°C to 55°C.
From the viewpoint that alkylation is promoted in the subsequent step, an alkali treatment time in this step is preferably 12 hours or more, and more preferably 14 hours or more. From the viewpoints that thermal decomposition is suppressed and a compound having high molecular weight product is obtained, the alkali treatment time is preferably 35 hours or less, and more preferably 25 hours or less. The alkali treatment time may be from 10 hours to 35 hours, from 10 hours to 25 hours, from 12 hours to 45 hours, from 12 hours to 35 hours, from 12 hours to 25 hours, from 14 hours to 45 hours, from 14 hours to 35 hours, or from 14 hours to 25 hours.

Solvent

The solvent used in the alkali treatment is not particularly limited. Examples of the solvent include dimethyl sulfoxide (DMSO), N,N-dimethylformamide (DMF), and 1,4-dioxane. The solvent may be an alcoholic solvent such as methyl alcohol, ethyl alcohol, or isopropyl alcohol, or a mixed solvent with such an alcoholic solvent. Two or more types of solvents may be used in combination as the solvent for the alkali treatment. From the viewpoint that the alkali treatment can be uniformly performed, the amount of the solvent added is preferably 2500 parts by weight or more, more preferably 3000 parts by weight or more, and even more preferably 3500 parts by weight or more, relative to 100 parts by weight of the biomass as a raw material. From the viewpoint of production efficiency, the amount of the solvent added is preferably 5000 parts by weight or less, more preferably 4500 parts by weight or less, and even more preferably 4000 parts by weight or less, relative to 100 parts by weight of the biomass as a raw material. The amount of the solvent added may be from 2500 to 5000 parts by weight, from 2500 to 4500 parts by weight, from 2500 to 4000 parts by weight, from 3000 to 5000 parts by weight, from 3000 to 4500 parts by weight, from 3000 to 4000 parts by weight, from 3500 to 5000 parts by weight, from 3500 to 4500 parts by weight, or from 3500 to 4000 parts by weight relative to 100 parts by weight of the biomass as a raw material.

A quaternary ammonium salt such as tetrabutylammonium fluoride may be added to the solvent. From the viewpoint that the biomass as a raw material is easily dissolved, the amount of the quaternary ammonium salt added is preferably 200 parts by weight or more, more preferably 300 parts by weight or more, and even more preferably 400 parts by weight or more, relative to 100 parts by weight of the biomass as a raw material. From the viewpoint of production efficiency, the amount of the quaternary ammonium salt added is preferably 600 parts by weight or less, more preferably 500 parts by weight or less, and even more preferably 450 parts by weight or less, relative to 100 parts by weight of the biomass as a raw material. The amount of the quaternary ammonium salt added may be from 200 to 600 parts by weight, from 200 to 500 parts by weight, from 200 to 450 parts by weight, from 300 to 600 parts by weight, from 300 to 500 parts by weight, from 300 to 450 parts by weight, from 400 to 600 parts by weight, from 400 to 500 parts by weight, or from 400 to 450 parts by weight relative to 100 parts by weight of the biomass as a raw material.

Alkali

The type of alkali is not particularly limited as long as the effects of the present disclosure are obtained. For example, a hydroxide of an alkali metal such as sodium or potassium is suitably used. Such an alkali may be added, as an aqueous alkali solution, to the biomass as a raw material. From the viewpoint that the alkali treatment is easily performed, the amount of the alkali added is preferably 600 parts by weight or more, more preferably 630 parts by weight or more, and even more preferably 650 parts by weight or more in terms of solid content, relative to 100 parts by weight of the biomass as a raw material. From the viewpoint that a compound having high molecular weight product is obtained, the amount of the alkali added is preferably 750 parts by weight or less, more preferably 730 parts by weight or less, and even more preferably 700 parts by weight or less in terms of solid content, relative to 100 parts by weight of the biomass as a raw material. The amount of the alkali added may be from 600 to 750 parts by weight, from 600 to 730 parts by weight, from 600 to 700 parts by weight, from 630 to 750 parts by weight, from 630 to 730 parts by weight, from 630 to 700 parts by weight, from 650 to 750 parts by weight, from 650 to 730 parts by weight, or from 650 to 700 parts by weight in terms of solid content, relative to 100 parts by weight of the biomass as a raw material.

Alkylation

In this production method, an alkylating agent is added to the alkali-treated biomass as a raw material, and they are reacted at a temperature of from 40°C to 55°C for from 30 hours to 120 hours. By reacting them under these conditions, the lignocellulose in the biomass as a raw material can be efficiently alkylated. Specifically, an alkyl group is introduced into the hydroxyl groups in the cellulose, hemicellulose, and lignin constituting the lignocellulose. In addition, it is considered that the interaction among the cellulose, hemicellulose, and lignin forming a higher-order structure is broken in the alkali treatment and the alkylation step. From the viewpoint of promoting the reaction, the alkylation reaction may be performed with stirring using a known stirring means.

From the viewpoint that the alkylation is promoted, an alkylation reaction temperature in this step is preferably 43°C or higher, and more preferably 45°C or higher. From the viewpoints that thermal decomposition is suppressed and a compound having high molecular weight product is obtained, the alkylation reaction temperature is preferably 53°C or lower, and more preferably 50°C or lower. The alkylation reaction temperature may be from 40 to 53°C, from 40 to 50°C, from 43 to 55°C, from 43 to 53°C, from 43 to 50°C, from 45 to 55°C, from 45 to 53°C, or from 45 to 50°C.

From the viewpoint that the alkylation is promoted, an alkylation reaction time in this step is preferably 35 hours or more, and more preferably 40 hours or more. From the viewpoints that thermal decomposition is suppressed and a compound having high molecular weight product is obtained, the alkylation reaction time is preferably 110 hours or less, and more preferably 100 hours or less. The alkylation reaction time may be from 30 to 110 hours, from 30 to 100 hours, from 35 to 120 hours, from 35 to 110 hours, from 35 to 100 hours, from 40 to 120 hours, from 40 to 110 hours, or from 40 to 100 hours.

Alkylating Agent

The alkylating agent in this production method is an alkyl halide having 2 or more carbons. The use of this alkylating agent makes it possible to produce a composition containing a lignocellulose derivative having a glass transition temperature which enables thermoforming and having a high molecular weight. Examples of the alkyl halide having 2 or more carbons include ethyl iodide, ethyl bromide, pentyl bromide, hexyl bromide, octyl bromide, ethyl chloride, ethyl fluoride, propyl iodide, and butyl iodide. Two or more types of alkyl halides having different numbers of carbons may be used in combination as the alkylating agent. The alkylating agent is preferably ethyl halide from the viewpoint that a composition containing a lignocellulose derivative applicable to various uses is obtained, and is more preferably ethyl iodide from the viewpoint of ease of handling. As long as the effects of the present disclosure can be obtained, the alkylating agent may contain methyl halide, may contain a halogenated hydrocarbon having an unsaturated hydrocarbon group, an aromatic hydrocarbon group, or a hydrocarbon group containing a heteroatom, or may contain, for example, allyl chloride or benzyl chloride. As the alkylating agent, an alkyl ester of toluenesulfonic acid, methanesulfonic acid, or trifluoromethanesulfonic acid may be used as long as the effects of the present disclosure are not impaired.

From the viewpoint of promoting the alkylation reaction, the amount of the alkylating agent added is preferably 750 parts by weight or more, and more preferably 800 parts by weight or more in terms of solid content, relative to 100 parts by weight of the biomass as a raw material. From the viewpoint of production efficiency, the amount of the alkylating agent added is preferably 900 parts by weight or less, and more preferably 850 parts by weight or less in terms of solid content, relative to 100 parts by weight of the biomass as a raw material. The amount of the alkylating agent added may be from 750 to 900 parts by weight, from 750 to 850 parts by weight, from 800 to 900 parts by weight, or from 800 to 850 parts by weight in terms of solid content, relative to 100 parts by weight of the biomass as a raw material.

Fractionation

The lignocellulose alkylated with the alkyl halide having 2 or more carbons contains a cellulose skeleton-containing compound, a compound containing lignin, and a compound containing hemicellulose. In this production method, the alkylated lignocellulose is fractionated to produce a composition containing a lignocellulose derivative, the composition containing the cellulose skeleton-containing compound, the compound containing lignin, and the compound containing hemicellulose in desired proportions.

In the present specification, the "cellulose skeleton-containing compound" means cellulose or a cellulose derivative in which some or all of hydroxyl groups in cellulose are etherified with an alkyl group having 2 or more carbons. The "compound containing lignin" means lignin, or a lignin derivative in which some or all of hydroxyl groups in lignin are etherified with an alkyl group having 2 or more carbons. The term "compound containing hemicellulose" means hemicellulose, or a hemicellulose derivative in which some or all of hydroxyl groups in hemicellulose are etherified with an alkyl group having 2 or more carbons.

The fractionation means that a mixture is separated into components by utilizing differences in physical properties among the constituent components. In the production method according to an embodiment of the present disclosure, a method for fractionating the alkylated lignocellulose is not particularly limited. Typically, the fractionation can be performed by precipitation fractionation, dialysis treatment, or fractional extraction using differences in solubility between cellulose and the cellulose derivative, lignin and the lignin derivative, and hemicellulose and the hemicellulose derivative in a solvent.

As illustrated in FIG. 1, in the present embodiment, the alkylated lignocellulose is charged into an excess amount of water to precipitate a water-insoluble or poorly water-soluble component as a solid. Thereafter, the mixture can be subjected to solid-liquid separation using a known means such as filtration to separate the mixture into a solid content containing a water-insoluble or poorly water-soluble component and a filtrate containing an amphiphilic component. The filtrate can be subjected to a dialysis treatment to yield an amphiphilic component (Composition E3).

Next, an alcohol (for example, methanol) is added to and mixed with the solid content containing the water-insoluble or poorly water-soluble component to precipitate an alcohol-insoluble or poorly alcohol-soluble component as a solid. Thereafter, the mixture can be subjected to solid-liquid separation using a known means such as filtration to separate the mixture into a solid content containing an alcohol-insoluble or poorly alcohol-soluble component and a filtrate containing an alcohol-soluble or readily alcohol-soluble component (Composition E2). A component (Composition E1) that is water-insoluble or poorly water-soluble and alcohol-insoluble or poorly alcohol-soluble can be obtained by appropriately drying the solid content. In addition, a component (Composition E2) that is water-insoluble or poorly water-soluble and alcohol-soluble or readily alcohol-soluble can be obtained by appropriately concentrating or drying the filtrate.

As illustrated in FIG. 1, Compositions E1, E2, and E3 obtained by fractionating the alkylated lignocellulose are the compositions containing a lignocellulose derivative according to an embodiment of the present disclosure.

In the production method according to an embodiment of the present disclosure, a temperature condition at the time of fractionation of the alkylated lignocellulose is not particularly limited. The temperature is usually room temperature (25°C $\pm$ 5°C), but can be appropriately selected depending on the type of biomass as a raw material to be used, and the constitution of the desired composition containing a lignocellulose derivative.

Composition Containing Lignocellulose Derivative

The composition containing a lignocellulose derivative according to an embodiment of the present disclosure contains at least one of the group consisting of a compound containing lignin and a compound containing hemicellulose.

The composition may further contain a cellulose derivative in which some or all of hydroxyl groups in cellulose are etherified with an alkyl group having 2 or more carbons. The compound containing lignin is lignin, or a lignin derivative in which some or all of hydroxyl groups in lignin are etherified with an alkyl group having 2 or more carbons. The compound containing hemicellulose is hemicellulose, or a hemicellulose derivative in which some or all of hydroxyl groups in hemicellulose are etherified with an alkyl group having 2 or more carbons. The composition may further contain cellulose.

According to the composition containing a lignocellulose derivative according to an embodiment of the present disclosure, the physical properties of the alkylated cellulose derivative, the compound containing lignin, and the compound containing hemicellulose are exhibited depending on the proportions of the constituent components. The composition containing a lignocellulose derivative can be applied to various applications including a molded body obtained by thermoforming, depending on the types and degrees of substitution of the alkyl groups introduced into the cellulose derivative, the lignin derivative, and the hemicellulose derivative, and depending on the constituent proportions of the cellulose derivative, the compound containing lignin, and the compound containing hemicellulose.

Alkyl Group

In an embodiment according to the present disclosure, the numbers of carbons of the alkyl group introduced into the cellulose derivative, the lignin derivative, and the hemicellulose derivative may be 2 or more, and the type thereof is not particularly limited. For example, the alkyl group may be linear, branched, or cyclic. Specific examples of the alkyl group having 2 or more carbons include an ethyl group, a propyl group, an isopropyl group, a butyl group, an isobutyl group, a sec-butyl group, a tert-butyl group, a pentyl group, and a hexyl group. From the viewpoint of low steric hindrance and ease of introduction into lignocellulose, the alkyl group is preferably a linear alkyl group, more preferably a linear alkyl group having 10 or less carbons, even more preferably an ethyl group and a propyl group, and particularly preferably an ethyl group. The cellulose derivative, the lignin derivative, and the hemicellulose derivative may be etherified with two or more types of alkyl groups.

Degree of Alkyl Substitution

As long as the effects of the present disclosure are obtained, the degree of alkyl substitution of the cellulose derivative, the lignin derivative, and the hemicellulose derivative is not particularly limited, and can be appropriately adjusted depending on the applications and physical properties. From the viewpoint of ease of thermoforming, the degree of alkyl substitution of the cellulose derivative is preferably 2.0 or more and more preferably 2.5 or more, and the upper limit value thereof may be 3.0. The degree of alkyl substitution of the cellulose derivative may be from 2.0 to 3.0, or may be from 2.5 to 3.0. The degree of alkyl substitution of the lignin derivative may be 1.0 or more or 1.5 or more, or may be 4.0 or less or 3.5 or less. The degree of alkyl substitution of the hemicellulose derivative may be 0.5 or more and 1.0 or more, or may be 3.0 or less and 2.5 or less. A method for measuring the degree of alkyl substitution will be described later in the Examples.

Preferred Aspect 1: Composition E1

The compositions containing a lignocellulose derivative according to an embodiment of the present disclosure are produced by the above-described production method. Specifically, the compositions containing a lignocellulose derivative are produced by fractionating an alkylated lignocellulose by utilizing differences in solvent solubility among the constituent components. In a preferred embodiment, the alkylated lignocellulose is fractionated into compositions containing a lignocellulose derivative of the following aspects.

A composition containing a lignocellulose derivative of Aspect 1 contains a cellulose derivative in which some or all of hydroxyl groups in cellulose are etherified with an alkyl group having 2 or more carbons, and a compound containing lignin, and does not contain a compound containing hemicellulose. The composition containing a lignocellulose derivative of Aspect 1 is a composition illustrated as Composition E1 in FIG. 1, and contains a fractionated component that is water-insoluble or poorly water-soluble and alcohol-insoluble or poorly alcohol-soluble. Depending on the type of biomass as a raw material, the composition containing a lignocellulose derivative of Aspect 1 may further contain a compound containing hemicellulose.

From the viewpoint that a molded body having excellent mechanical properties is obtained by thermoforming, the composition containing a lignocellulose derivative of Aspect 1 has a number average molecular weight Mn of preferably 30000 or more, and more preferably 35000 or more. The upper limit value of the number average molecular weight Mn is not particularly limited, but, from the viewpoint of ease of production, the number average molecular weight Mn is preferably 120000 or less. The number average molecular weight Mn of the composition containing a lignocellulose derivative of Aspect 1 may be 30000 to 120000, or may be 35000 to 120000.

From the viewpoint of improving the strength of the resulting molded article, the composition containing a lignocellulose derivative of Aspect 1 has a weight average molecular weight Mw of preferably 60000 or more and more preferably 65000 or more. The upper limit value of the weight average molecular weight Mw is not particularly limited, but, from the viewpoint of ease of production, the weight average molecular weight Mw is preferably 400000 or less. The weight average molecular weight Mw of the composition containing a lignocellulose derivative of Aspect 1 may be from 60000 to 400000, or may be from 65000 to 400000.

From the viewpoint of high melt fluidity, a molecular weight distribution Mw/Mn determined from the weight average molecular weight Mw and the number average molecular weight Mn of the composition containing a lignocellulose derivative of Aspect 1 is preferably 1.0 or more, more preferably 1.5 or more, and even more preferably 1.6 or more. From the viewpoint of improving the strength of the resulting molded article, the molecular weight distribution Mw/Mn is preferably 7.0 or less, more preferably 6.0 or less, even more preferably 4.0 or less, and particularly preferably 2.8 or less. The molecular weight distribution Mw/Mn of the composition containing a lignocellulose derivative of Aspect 1 may be from 1.0 to 7.0, from 1.0 to 6.0, from 1.0 to 4.0, from 1.0 to 2.8, from 1.5 to 7.0, from 1.5 to 6.0, from 1.5 to 4.0, from 1.5 to 2.8, from 1.6 to 7.0, from 1.6 to 6.0, from 1.6 to 4.0, or from 1.6 to 2.8.

The number average molecular weight Mn, the weight average molecular weight Mw, and the molecular weight distribution Mw/Mn of the composition containing a lignocellulose derivative of Aspect 1 can be measured by gel permeation chromatography. Details of a measurement method and measurement conditions will be described in the Examples below.

The composition containing a lignocellulose derivative of Aspect 1 may have a glass transition point. From the viewpoint of ease of thermoforming, the composition containing a lignocellulose derivative of Aspect 1 has a glass transition temperature Tg of preferably 120°C or lower, and more preferably 115°C or lower. The glass transition temperature Tg of the composition of Aspect 1 may be 90°C or higher, or may be 100°C or higher. The glass transition temperature Tg of the composition containing a lignocellulose derivative of Aspect 1 may be from 90 to 120°C, from 90 to 115°C, from 100 to 120°C, or from 100 to 115°C.

The composition containing a lignocellulose derivative of Aspect 1 may have a melting point. From the viewpoint of improving heat resistance, the composition containing a lignocellulose derivative of Aspect 1 has a melting point Tm of preferably 250°C or higher, and more preferably 260°C or higher. The melting point Tm of the composition of Aspect 1 may be 300°C or lower, or may be 290°C or lower. The melting point Tm of the composition containing a lignocellulose derivative of Aspect 1 may be from 250 to 300°C, from 250 to 290°C, from 260 to 300°C, or from 260 to 290°C.

The glass transition temperature Tg and the melting point Tm of the composition containing a lignocellulose derivative of Aspect 1 can be measured by differential scanning calorimetry. Details of a measurement method and measurement conditions will be described in the Examples below.

Constituent Proportion in Aspect 1

As described above, the composition containing a lignocellulose derivative (Composition E1) of Aspect 1 contains a cellulose derivative and a compound containing lignin. In the composition containing a lignocellulose derivative of Aspect 1, the constituent proportion of the compound containing lignin in all constituent components may be more than 0%, 5% or more, 15% or more, or 25% or more. From the viewpoint of achieving thermoformability and having an ultraviolet absorbing ability, a larger constituent proportion of the compound containing lignin is more preferable. The constituent proportion thereof may be 50% or less, 45% or less, or 35% or less. In the composition containing a lignocellulose derivative of Aspect 1, the proportion of the compound containing lignin in all the constituent components may be more than 0% and 50% or less, more than 0% and 45% or less, more than 0% and 35% or less, from 5% to 50%, from 5% to 45%, from 5% to 35%, from 15% to 50%, from 15% to 45%, from 15% to 35%, from 25% to 50%, from 25% to 45%, or from 25% to 35%.

The proportion of the compound containing lignin in the composition containing a lignocellulose derivative can be measured by nuclear magnetic resonance (NMR) measurement or ultraviolet-visible (UV-Vis) absorption measurement. Details will be described below in the Examples.

Preferred Aspect 2: Composition E2

A composition containing a lignocellulose derivative of Aspect 2 contains a compound containing lignin and a compound containing hemicellulose. The composition containing a lignocellulose derivative of Aspect 2 is a composition illustrated as Composition E2 in FIG. 1, and contains a fractionated component that is water-insoluble or poorly water-soluble and alcohol-soluble or readily alcohol-soluble. Depending on the type of biomass as a raw material, the composition containing a lignocellulose derivative of Aspect 2 may further contain a cellulose derivative in which some or all of hydroxyl groups in cellulose are etherified with an alkyl group having 2 or more carbons.

From the viewpoint that a molded body having excellent mechanical properties is obtained by thermoforming, the composition containing a lignocellulose derivative of Aspect 2 has a number average molecular weight Mn of preferably 50000 or more, and more preferably 51000 or more. The upper limit value of the number average molecular weight Mn is not particularly limited, but, from the viewpoint of ease of production, the number average molecular weight Mn is preferably 65000 or less. The number average molecular weight Mn of the composition containing a lignocellulose derivative of Aspect 2 may be 50000 to 65000, or may be 51000 to 65000.

From the viewpoint of improving the strength of the resulting molded article, the composition containing a lignocellulose derivative of Aspect 2 has a weight average molecular weight Mw of preferably 100000 or more and more preferably 140000 or more. The upper limit value of the weight average molecular weight Mw is not particularly limited, but, from the viewpoint of ease of production, the weight average molecular weight Mw is preferably 300000 or less. The number average molecular weight Mw of the composition containing a lignocellulose derivative of Aspect 2 may be 100000 to 300000, or may be 140000 to 300000.

From the viewpoint of high melt fluidity, a molecular weight distribution Mw/Mn determined from the weight average molecular weight Mw and the number average molecular weight Mn of the composition containing a lignocellulose derivative of Aspect 2 is preferably 1.0 or more, more preferably 2.0 or more, and even more preferably 2.2 or more. From the viewpoint of improving the strength of the resulting molded article, the molecular weight distribution Mw/Mn is preferably 7.0 or less, more preferably 6.0 or less, and even more preferably 5.0 or less. The molecular weight distribution Mw/Mn of the composition containing a lignocellulose derivative of Aspect 2 may be from 1.0 to 7.0, from 1.0 to 6.0, from 1.0 to 5.0, from 2.0 to 7.0, from 2.0 to 6.0, from 2.0 to 5.0, from 2.2 to 7.0, from 2.2 to 6.0, or from 2.2 to 5.0.

The number average molecular weight Mn, the weight average molecular weight Mw, and the molecular weight distribution Mw/Mn of the composition containing a lignocellulose derivative of Aspect 2 can be measured in the same manner as in the case of the composition of Aspect 1.

The composition containing a lignocellulose derivative of Aspect 2 may have a glass transition point. From the viewpoint of ease of thermoforming, the composition containing a lignocellulose derivative of Aspect 2 has a glass transition temperature Tg of preferably 120°C or lower, and more preferably 90°C or lower. The glass transition temperature Tg of the composition of Aspect 2 may be 50°C or higher, or may be 55°C or higher. The glass transition temperature Tg of the composition containing a lignocellulose derivative of Aspect 2 may be from 50 to 120°C, from 50 to 90°C, from 55 to 120°C, or from 55 to 90°C.

The glass transition temperature Tg of the composition containing a lignocellulose derivative of Aspect 2 is measured in the same manner as in the case of the composition of Aspect 1.

Constituent Proportion in Aspect 2

As described above, the composition containing a lignocellulose derivative of Aspect 2 contains a compound containing lignin and a compound containing hemicellulose. In the composition containing a lignocellulose derivative of Aspect 2, the constituent proportion of the compound containing lignin in all the constituent components may be more than 0%, may be 5% or more, may be 15% or more, or may be 20% or more. From the viewpoint of achieving thermoformability and having an ultraviolet absorbing ability, a larger constituent proportion of the compound containing lignin is more preferable. The constituent proportion thereof may be 35% or less, or may be 30% or less. In the composition containing a lignocellulose derivative of Aspect 2, the proportion of the compound containing lignin in all the constituent components may be more than 0% and 35% or less, more than 0% and 30% or less, from 5% to 35%, from 5% to 30%, from 15% to 35%, from 15% to 30%, from 20% to 35%, or from 20% to 30%.

In the composition containing a lignocellulose derivative of Aspect 2, the constituent proportion of the compound containing hemicellulose in all the constituent components may be 65% or more or 70% or more, and may be 95% or less or 90% or less. In the composition containing a lignocellulose derivative of Aspect 2, the proportion of the compound containing hemicellulose in all the constituent components may be from 65% to 95%, 65% to 90%, 70% to 95%, or 70% to 90%.

The proportions of the compound containing lignin and the compound containing hemicellulose in the composition containing a lignocellulose derivative can be measured in the same manner as in the case of the composition of Aspect 1.

Preferred Aspect 3: Composition E3

A composition containing a lignocellulose derivative of Aspect 3 contains a compound containing hemicellulose as a main component, and does not contain a compound containing lignin. The composition containing a lignocellulose derivative of the Aspect 3 is a composition illustrated as Composition E3 in FIG. 1 and contains an amphiphilic fractionated component. Depending on the type of biomass as a raw material, the composition containing a lignocellulose derivative of Aspect 3 may further contain a cellulose derivative in which some or all of hydroxyl groups in cellulose are etherified with an alkyl group having 2 or more carbons, or a compound containing hemicellulose.

From the viewpoint that high surface activity is obtained, the composition containing a lignocellulose derivative of Aspect 3 has a number average molecular weight Mn of preferably 12000 or less, and more preferably 10000 or less. The number average molecular weight Mn of the composition of Aspect 3 may be 2000 or more, or may be 2500 or more. The number average molecular weight Mn of the composition containing a lignocellulose derivative of Aspect 3 may be from 2000 to 12000, from 2000 to 10000, from 2500 to 12000, or from 2500 to 10000.

From the viewpoint that high surface activity is obtained, the composition containing a lignocellulose derivative of Aspect 3 has a weight average molecular weight Mw of preferably 15000 or less and more preferably 12000 or less. The weight average molecular weight Mw of the composition of Aspect 3 may be 2500 or more, or may be 3000 or more. The weight average molecular weight Mw of the composition containing a lignocellulose derivative of Aspect 3 may be from 2500 to 15000, from 2500 to 12000, from 3000 to 15000, or from 3000 to 12000.

A molecular weight distribution Mw/Mn determined from the weight average molecular weight Mw and the number average molecular weight Mn of the composition containing a lignocellulose derivative of Aspect 3 may be 1.0 or more, or 1.1 or more. The molecular weight distribution Mw/Mn of the composition of Aspect 3 may be 7.0 or less, 4.0 or less, 2.2 or less, or 2.0 or less. The molecular weight distribution Mw/Mn of the composition containing a lignocellulose derivative of Aspect 3 may be from 1.0 to 7.0, from 1.0 to 4.0, from 1.0 to 2.2, from 1.0 to 2.0, from 1.1 to 7.0, from 1.1 to 4.0, from 1.1 to 2.2, or from 1.1 to 2.0.

The number average molecular weight Mn, the weight average molecular weight Mw, and the molecular weight distribution Mw/Mn of the composition containing a lignocellulose derivative of Aspect 3 can be measured in the same manner as in the case of the composition of Aspect 1.

The composition containing a lignocellulose derivative of Aspect 3 may have a glass transition point. The glass transition temperature Tg of the composition containing a lignocellulose derivative of Aspect 3 may be 100°C or lower, or may be 95°C or lower. The glass transition temperature Tg of the composition of Aspect 3 may be 65°C or higher, or may be 70°C or higher. The glass transition temperature Tg of the composition containing a lignocellulose derivative of Aspect 3 may be from 65 to 100°C, from 65 to 95°C, from 70 to 100°C, or from 70 to 95°C.

The glass transition temperature Tg of the composition containing a lignocellulose derivative of Aspect 3 is measured in the same manner as in the case of the composition of Aspect 1.

Constituent Proportion in Aspect 3

As described above, the composition containing a lignocellulose derivative of Aspect 3 contains a compound containing hemicellulose as a main component. In the composition containing a lignocellulose derivative of Aspect 3, the constituent proportion of the compound containing hemicellulose in all the constituent components may be 95% or more, 98% or more, or 100%.

The proportion of the compound containing hemicellulose in the composition containing a lignocellulose derivative of Aspect 3 can be measured in the same manner as in the case of the composition of Aspect 1.

Molded body

A molded body according to an embodiment of the present disclosure is formed from the composition containing a lignocellulose derivative described above. Preferably, the molded body according to an embodiment of the present disclosure is formed from the composition of Aspect 1 or 2 described above. As described above, the compositions of Aspect 1 and Aspect 2 contain a compound containing lignin. The compound containing lignin has an ultraviolet absorbing ability. In the molded body formed from the composition of Aspect 1 or 2, deterioration due to ultraviolet rays is suppressed and excellent weather resistance is exhibited without blending of an ultraviolet absorber as an additive. The molded body may further contain a known additive such as a dye as long as the effects of the present disclosure are not impaired. The shape or the like of the molded body according to an embodiment of the present disclosure is not particularly limited, and a representative molded body includes a sheet or a film.

The method for producing the molded body according to an embodiment of the present disclosure is not particularly limited. For example, the molded body according to an embodiment of the present disclosure may be produced through thermoforming of the composition containing a lignocellulose derivative by known means such as melt molding or injection molding. The molded body according to an embodiment of the present disclosure may be produced by a method in which a solution containing the composition containing a lignocellulose derivative is cast on a base material and then dried.

When the composition containing a lignocellulose derivative is subjected to thermoforming, a molding temperature may be 120°C or higher, 140°C or higher, or 180°C or higher, and may be 280°C or lower, 250°C or lower, or 230°C or lower. For example, in the case of the composition of Aspect 1, the thermal decomposition temperature exceeds 300°C, thermal degradation due to thermoforming in the temperature range is avoided. As long as the effects of the present disclosure are obtained, a drying treatment may be performed before and/or after molding of the composition containing a lignocellulose derivative.

Application

The composition containing a lignocellulose derivative and molded body according to an embodiment of the present disclosure can be suitably used as a base material for, for example, tableware, packaging containers, trays, agricultural materials, fishery materials, OA parts, home electric appliance parts, automobile members, daily goods, and stationery. In addition, the composition containing a lignocellulose derivative according to an embodiment of the present disclosure can be used in applications as an adhesive, a lacquer, a binder, a coating agent, and a surfactant by selecting its physical properties and constitution. The composition containing a lignocellulose derivative, the composition containing a compound containing lignin can be applied to fields of medical care, clothes, and housing equipment as films, fibers, and wallpaper required to have functions such as antibacterial property, ultraviolet absorption property, and metal adsorption ability.

Examples

The effects of the present disclosure will be clarified by the Experimental Examples below, but the present disclosure should not be construed as being limited based on the description of the Experimental Examples.

Production of Composition Containing Lignocellulose Derivative Experimental Example 1

Larch trees fallen by wind (Larix Kaempferi, provided by Kyoto University Forests in Hokkaido) were prepared as a biomass as a raw material. This biomass as a raw material was treated using a tabletop slide circular saw (trade name "C12RSH") available from Hitachi Koki Co., Ltd., and then passed through a 100-mesh sieve (opening: 0.149 mm). The powder passed through the sieve was vacuum dried at 105°C for 24 hours to prepare a raw material powder having a dry weight of 2.4 g.

Next, 2.4 g of the raw material powder and 10.4g (= 0.0392 mmol) of tetrabutylammonium fluoride trihydrate (TBAF·3H$_2$O, available from BLD Pharm Ltd.) were added to 80 mL of dimethyl sulfoxide (DMSO, available from Nacalai Tesque, Inc.). They were stirred for 10 minutes, and then 16.0 g (= 0.400 mol) sodium hydroxide (NaOH, Wako Pure Chemical Industries, Ltd.) was added, and an alkali treatment was performed at 50°C for 12 hours. Subsequently, the reaction liquid was allowed to cool to room temperature, and 10.4 mL (= 0.129 mol) of ethyl iodide (EtI, available from Nacalai Tesque, Inc.) was then added under ice-cooling. The mixture was further ice-cooled for 1 hour and then stirred at room temperature for 24 hours. Thereafter, the temperature was raised to 50°C and alkylation was performed by stirring for 48 hours. In the alkali treatment and the alkylation step, the reaction system was periodically filled with nitrogen gas.

After completion of the alkylation, the resultant reaction solution was ice-cooled for 5 minutes, and the whole amount was added dropwise to an excess amount of distilled water. Subsequently, hydrochloric acid was added to adjust the pH of the solution to from 2 to 3, and then the solution was left to stand overnight to precipitate a precipitate (solid content). Thereafter, the mixture was separated into a filtration residue A and a filtrate A by filtration under reduced pressure (filter: model number "H050A047A" available from ADVANTEC Co., Ltd.) and washing with distilled water.

Methanol (50 ml) was added to the dried product obtained by freeze-drying the collected filtration residue A, and the mixture was centrifuged (5°C, 11000 rpm, 10 min). This operation was repeated a plurality of times, and then a precipitate as Composition E1 and a supernatant were respectively collected. Composition E2 was obtained by distilling off the solvent from the supernatant under reduced pressure using a rotary evaporator.

By using a rotary evaporator, the solvent was distilled off from the filtrate A after filtration under reduced pressure, and then a dialysis treatment was performed using a dialysis membrane (MWCO1000), and a solution and a precipitate in the dialysis membrane after one week were collected and freeze-dried to produce Composition E3. The yield (wt.%) of each composition in Experimental Example 1 is shown in Table 1 below.

Experimental Examples 2 to 5

Compositions E1, E2 and E3 were produced in the same manner as in Experimental Example 1 except that the alkali treatment time and the alkylation time were changed to those shown in Table 1 below. The yields (wt.%) of Compositions E1, E2 and E3 produced are respectively shown in Table 1 below.

Physical Properties of Composition Containing Lignocellulose Derivative

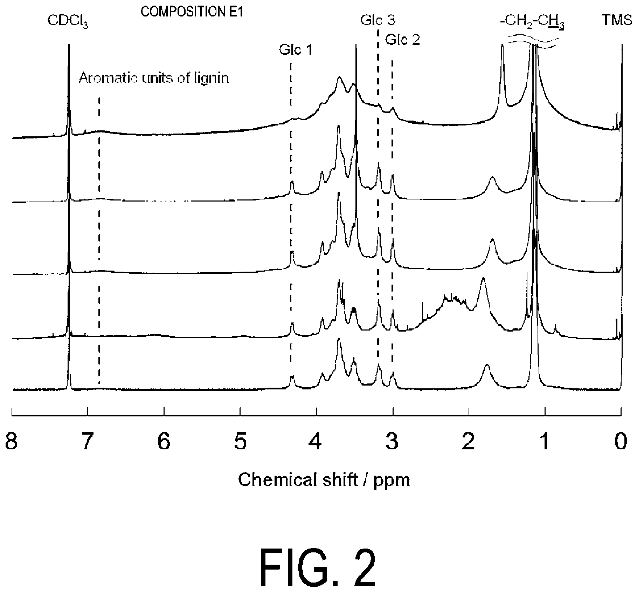

The following tests were conducted to measure the physical properties of Compositions E1, E2, and E3 produced in Experimental Examples 1 to 5. The obtained results are shown in Tables 1 to 5 below and FIGS. 2 to 8. The physical property values shown as those of Referential Examples 1 and 2 in the tables are based on commercially available ethyl cellulose (available from Wako Pure Chemical Industries, Ltd.) and commercially available methyl cellulose (available from Shin-Etsu Chemical Co., Ltd.), respectively.

Gel Permeation Chromatography (GPC) Measurement

Each of the compositions (5 mg) was dissolved in 5 mL of tetrahydrofuran (THF, available from Nacalai Tesque, Inc.) to prepare a measurement sample, and the molecular weight and molecular weight distribution of the composition were measured under the following measurement conditions.

Measurement apparatus: trade name "HPLC-Prominence" available from Shimadzu Corporation
Column: "TSK SuperHZ 1000 (exclusion limit: 1000)", "TSK SuperHZ 2000 (exclusion limit: 10000)" and "TSK SuperHZ 3000 (exclusion limit: 60000)" available from Tosoh Corporation (column size: 4.6 mm ID $\times$ 150 mm)
Flow rate: 0.20 mL/min
Column temperature: 40°C
Detector: RI, UV (254 nm)
Sample concentration: 0.1% (w/v)
Sample injection volume: 10 $\mu$L
Mobile phase: THF (containing stabilizer)
Standard sample: monodisperse polystyrene

As shown in Table 1 below, a composition containing a lignocellulose derivative (Composition E1) having a molecular weight equivalent to that of commercially available ethyl cellulose was produced by selecting the alkali treatment time and the alkylation time.

[Table 1]

| | Alkali treatment time [hr] | Alkylation time [hr] | Composition E1 | | | | Composition E2 | | | | Composition E3 | | | |
|---|---|---|---|---|---|---|---|---|---|---|---|---|---|---|
| | | | Mn ×10³ | Mw ×10³ | Mw/Mn [-] | Yield [wt.%] | Mn ×10³ | Mw ×10³ | Mw/Mn [-] | Yield [wt.%] | Mn ×10³ | Mw ×10³ | Mw/Mn [-] | Yield [wt.%] |
| Experimental Example 1 | 12 | 48 | 91.9 | 361.6 | 3.9 | 53.8 | 52.0 | 250.4 | 4.8 | 31.5 | 4.4 | 5.8 | 1.3 | 2.42 |
| Experimental Example 2 | 12 | 96 | 28.7 | 67.3 | 2.3 | 31.2 | 12.2 | 38.4 | 3.1 | 39.1 | 2.7 | 5.2 | 1.9 | 7.24 |
| Experimental Example 3 | 18 | 96 | 36.4 | 65.5 | 1.8 | 31.5 | 19.9 | 60.4 | 3.0 | 34.0 | 4.6 | 6.1 | 1.3 | 2.71 |
| Experimental Example 4 | 24 | 48 | 63.5 | 146.8 | 2.3 | 41.3 | 50.7 | 142.7 | 2.8 | 25.5 | 9.8 | 11.4 | 1.2 | 4.22 |
| Experimental Example 5 | 24 | 92 | 18.1 | 43.1 | 2.4 | 29.7 | 8.2 | 20.7 | 2.5 | 30.4 | 3.3 | 4.1 | 1.2 | 5.77 |
| Referential Example 1 | - | - | 34.9 | 67.5 | 1.9 | - | - | - | - | - | - | - | - | - |

Nuclear Magnetic Resonance (NMR) Measurement

Each of the compositions was dissolved in deuterated chloroform (CDCl$_3$) or heavy water (D$_2$O) to prepare a sample solution having a concentration of 10 mg/0.7 mL, and $^1$H-NMR measurement was performed under the following measurement conditions.

Measurement apparatus: "500NMR" available from Varian
Observation time: 5 s
Relaxation time: 3 s
Observed frequency: 499.8 MHz
Cumulative number of scans: 16

The $^1$H-NMR spectra obtained for Compositions E1, E2, and E3 are illustrated in FIGS. 2 to 4, respectively. The chemical shift value was expressed in ppm based on the peak of a methyl group of tetramethylsilane (TMS) (0 ppm: when CDCl$_3$ was used) or the peak of a hydroxy group of D$_2$O (4.79 ppm: when D$_2$O was used) as an internal standard.
From FIGS. 2 to 4, it was confirmed that Compositions E1 to E3 had a polysaccharide-containing structure, and all of them had ethyl groups introduced therein. From the presence of a peak of an aromatic ring derived from the lignin skeleton and the absence of a peak of mannan derived from hemicellulose in FIG. 2, Composition E1 was confirmed to contain ethyl cellulose and a compound containing lignin (hereinafter referred to as "lignin") and not to contain a compound containing hemicellulose (hereinafter referred to as "hemicellulose"). Next, assuming that the lignin is a polymer of coniferyl alcohol, the constituent proportion of the compound containing lignin in Composition E1 was calculated from the $^1$H-NMR spectra of FIG. 2. Specifically, an integrated value A of a peak at from 6.5 to 7.2 ppm, an integrated value B of a peak at from 1.0 to 1.2 ppm, and an integrated value C of a peak at from 2.9 to 4.2 ppm were determined, and a lignin content (%) was determined according to the following formulae. The obtained results are shown in Table 2 below.

$$\text{Integrated value } A_1 \text{ of one proton in benzene ring} = A/3$$

$$\text{Integrated value } A_2 \text{ of protons of lignin side chain} = A * 7/3$$

$$\text{Integrated value } B_1 \text{ of methylene proton} = B * 2/3$$

$$\text{Integrated value } C_1 \text{ of one proton in pyranose ring} = C - A_2 - B_1$$

$$\text{Lignin content (\%)} = A_1/(A_1 + C_1) \times 100$$

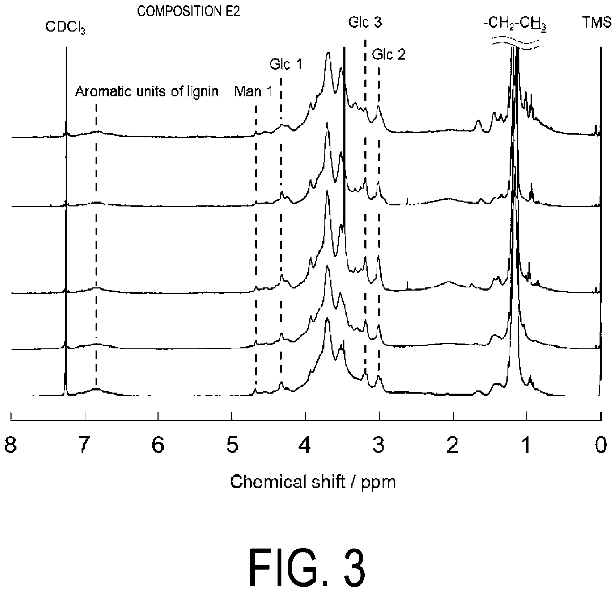

In Table 2 below, tr means a trace component. Table 2 shows that a decrease in the reaction times of the alkali treatment and the alkylation leads to an increase in lignin content. The results suggested that when the reaction times are shorter, the interaction between cellulose and lignin is broken.
From the presence of the peak of the aromatic ring derived from the lignin skeleton and the peak (Man1) of mannan derived from hemicellulose in FIG. 3, Composition E2 was confirmed to contain hemicellulose in addition to lignin. Next, the ratio (9.8:1.0) of hexoses to pentoses as hemicelluloses was determined from the refined sugar analysis of larch as the biomass as a raw material, and the constituent proportion of the compound containing lignin in Composition E2 was calculated from the $^1$H-NMR spectra of FIG. 3 in the same manner as in the case of Composition E1. Specifically, from the integrated value A of the peak at from 6.5 to 7.2 ppm, the integrated value B of the peak at from 1.0 to 1.2 ppm, and the integrated value C of the peak at from 2.9 to 4.2 ppm, the lignin content (%) was determined according to the following formulae. The obtained results are shown in Table 2 below.

$$\text{Integrated value } A_1 \text{ of one proton in benzene ring} = A/3$$

$$\text{Integrated value } A_2 \text{ of protons of lignin side chain} = A * 7/3$$

$$\text{Integrated value } B_1 \text{ of methylene proton} = B * 2/3$$

$$\text{Integrated value } C_1 \text{ of one proton in hexose ring} = [(C - A_2 - B_1)/7]* (908/10.8)$$

$$\text{Integrated value } C_2 \text{ of one proton on pentose ring} = [(C - A_2 - B_1)/6]* (1.0/10.8)$$

$$\text{Lignin content (\%)} = A_1/(A_1 + C_1 + C_2) \times 100$$

Table 2 suggested that the alkali treatment and the alkylation reaction times cause less influence on the constituent components and constituent proportions of Composition E2.

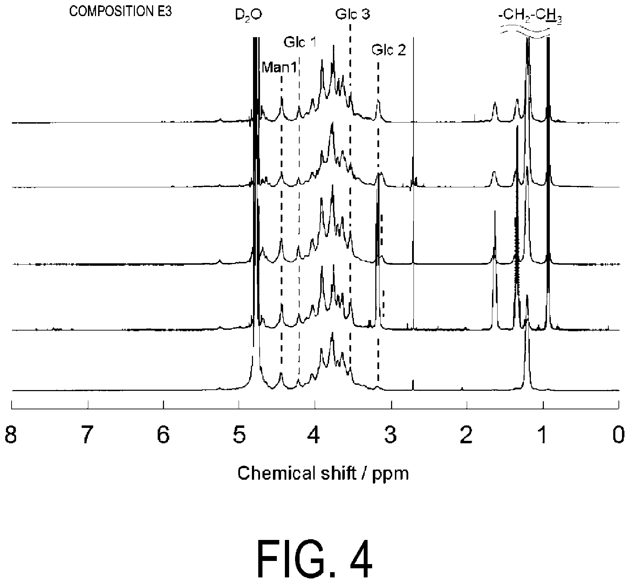

From the presence of a peak of mannan (Man1) derived from hemicellulose and the absence of a peak of an aromatic ring derived from the lignin skeleton in FIG. 4, Composition E3 was confirmed to contain hemicellulose and not to contain lignin. In addition, it was suggested that the amount of ethyl groups introduced into Composition E3 is affected by the reaction times of the alkali treatment and the alkylation reaction.

Evaluation of Degree of Ethyl Substitution

Fourier transform infrared spectroscopy (FT-IR) measurement was performed to evaluate the degree of ethyl substitution of each of the compositions. A Fourier transform infrared spectrophotometer "IR Prestage-21" available from Shimadzu Corporation was used for the measurement. The measurement conditions are as follows.

Measurement method: ATR method
Cumulative number of scans: 64
Measurement wavelength: from 400 to 4000 $cm^{-1}$
Resolution: 4 $cm^{-1}$

Table 2 shows the results of calculating the peak intensity of hydroxy groups with the C-O-C bond in the pyranose ring (1050 $cm^{-1}$) as a reference value of 1. In Table 2, DS is the degree of ethyl substitution of Composition E1 as determined by NMR measurement.

[Table 2]

| | Alkali treatment time [hr] | Alkylation time [hr] | Composition E1 | | | Composition E2 | | Composition E3 |
|---|---|---|---|---|---|---|---|---|
| | | | DS | OH groups | Lignin content [%] | OH groups | Lignin content [%] | OH groups |
| Experimental Example 1 | 12 | 48 | 2.59 | 0.07 | 45.0 | 0.09 | 17.3 | 0.16 |
| Experimental Example 2 | 12 | 96 | 2.66 | 0.08 | 28.0 | 0.06 | 15.0 | 0.16 |
| Experimental Example 3 | 18 | 96 | 3.18 | 0.03 | 30.0 | 0.05 | 16.0 | 0.22 |
| Experimental Example 4 | 24 | 48 | 2.48 | 0.11 | tr | 0.06 | 22.7 | 0.28 |
| Experimental Example 5 | 24 | 92 | 3.03 | 0.03 | 3.0 | 0.04 | 23.0 | 0.17 |

Table 2 suggested that, in Composition E1, an increase in the reaction times of the alkali treatment and the alkylation leads to a decrease in the peak intensity of hydroxy groups and an increase in the amount of ethyl groups introduced. The results correlate with the measured value of the degree of ethyl substitution DS by NMR measurement, and indicated that an increase in the reaction times leads to an increase in the degree of ethyl substitution. The results indicated that an increase in the reacting times tends to cause an increase in the degree of ethyl substitution also in Compositions E2 and E3, and that the peak intensity of hydroxy groups in Composition E3 is significantly smaller than that in Compositions E1 and E2.

Differential Scanning Calorimetry (DSC)

DSC measurement was performed on each of the compositions and on commercially available ethyl cellulose. "DSC7020" available from Hitachi High-Tech Science Corporation was used for the measurement. In the measurement, a stable DSC thermogram was obtained by raising the temperature from room temperature to 190°C at 10°C/min (1st heating), then rapidly cooling to -50°C using liquid nitrogen, and raising the temperature again to 350°C at 10°C/min (2nd heating). A midpoint of a baseline shift in the 2nd heating was determined as a glass-transition temperature Tg. Other measurement conditions are as follows.

Sample weight: about 5 mg
Pan: aluminum open pan
Atmosphere gas: nitrogen
Gas flow rate: 40 mL/min

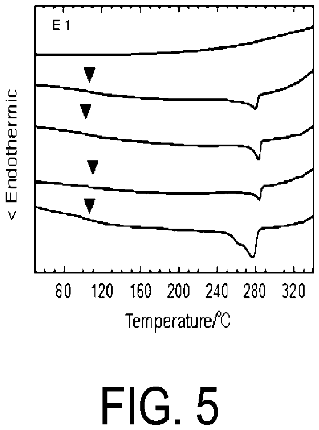

DSC thermograms obtained for Compositions E1, E2, and E3 and commercially available ethyl cellulose are illustrated in FIGS. 5 to 8, respectively. In FIGS. 5 to 8, the glass transition points are marked with ( ▼ ). The glass transition temperature Tg of each composition is shown in Table 3 below.

Table 3

|  | Alkali treatment time [hr] | Alkylation time [hr] | Composition E1 | Composition E2 | Composition E3 |
|---|---|---|---|---|---|
|  |  |  | Tg (°C) | Tg (°C) | Tg (°C) |
| Experimental Example 1 | 12 | 48 | - | - | 74.0 |
| Experimental Example 2 | 12 | 96 | 107.4 | 88.1 | 77.0 |
| Experimental Example 3 | 18 | 96 | 104.2 | 80.0 | 89.1 |
| Experimental Example 4 | 24 | 48 | 112.6 | 78.6 | 72.2 |
| Experimental Example 5 | 24 | 92 | 107.6 | 61.6 | 84.8 |
| Referential Example 1 | - | - | 124.3 | - | - |

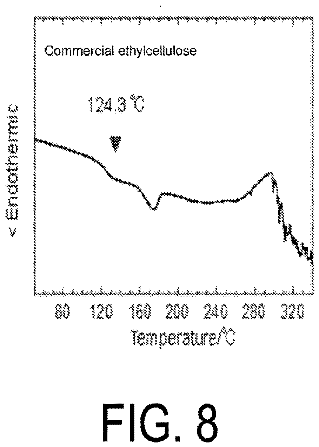

As can be seen from FIG. 8, the commercially available ethyl cellulose underwent glass transition at 124.3°C, melted at from 170 to 180°C, and was thermally decomposed at 300°C or higher. As can be seen from FIG. 5, Composition E1 underwent glass transition at around 110°C, melted at from 270 to 280°C, and was not thermally decomposed within the measurement temperature range. The results indicated that Composition E1 has a melting point and a thermal decomposition temperature higher than those of the commercially available ethyl cellulose and is suitable for use in a high temperature region. Neither glass-transition temperature nor melting point was observed in Composition E1 of Experimental Example 1. The reason is considered that the composition had a high content of lignin, which is amorphous, and did not exhibit the crystallinity of cellulose.

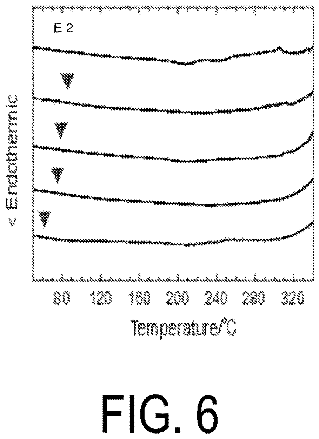

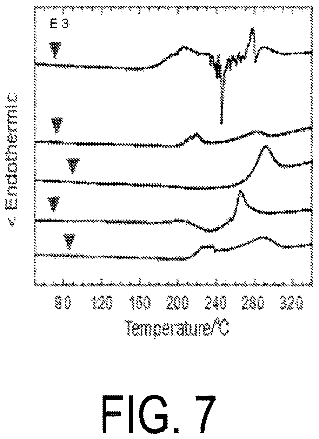

As illustrated in FIGS. 6 and 7, in Compositions E2 and E3, no melting point was observed and only a glass transition point was observed. According to the literature, hemicellulose and lignin in a dry state have a Tg of from 130 to 230°C. Thus, it is considered that the Tg was greatly lowered by ethyl substitution. It was also confirmed that all of Compositions E3 are thermally decomposed at 200°C or higher.

Evaluation of Surface Activity

The surface tensions of Compositions E3 of Experimental Examples 1 to 5 were measured by the Wilhelmy method using "CBVP-A3" available from Kyowa Interface Science Co., Ltd. The measurement conditions are as follows.

Critical micelle concentrations CMC (mg/mL) and surface tensions $\gamma_{CMC}$ (mN/m) of Compositions E3 are shown in Table 4 below.

Sample volume: 700 $\mu$L
Temperature: 20°C

[Table 4]

| | | Referential Example 2 | Comparative Example | Experimental Example 1 | Experimental Example 2 | Experimental Example 3 | Experimental Example 4 | Experimental Example 5 |
|---|---|---|---|---|---|---|---|---|
| CMC | [mg/mL] | 0.08 | 0.02 | 0.06 | 0.02 | 0.04 | 0.30 | 0.02 |
| YCMC | [mN/m] | 50.5 | 52.1 | 46.0 | 41.4 | 42.8 | 50.5 | 49.8 |

In Table 4, Referential Example 2 corresponds to commercially available methyl cellulose (available from Shin-Etsu Chemical Co., Ltd.), and Comparative Example corresponds to a composition described as "Me3" in Non-Patent Literature 1. The composition of Comparative Example was produced according to the method described in Non-Patent Literature 1.

The surface activity is known to be higher as the surface tension is smaller and the critical micelle concentration (CMC) is lower. As can be seen from Table 4, Composition E3 of Experimental Example 2 has the highest surface activity. The results suggested that the present disclosure can provide a composition having surface activity higher than that of the composition of Referential Example or Comparative Example.

Molded Body: Formation of Film

Films were formed by a casting method using Compositions E1 and E2 of Experimental Examples 1 to 5. Specifically, each sample was added to ethyl acetate, and the mixture was stirred for 2 days to prepare a solution having a concentration of 5 wt.%. Thereafter, the solution was cast on a petri dish made of Teflon ("registered trademark"), and dried by allowing it to stand still at room temperature. The results are shown in Table 5 below.

Table 5

|  | Alkali treatment time [hr] | Alkylation time [hr] | Composition E1 | Composition E2 |
|---|---|---|---|---|
| Experimental Example 1 | 12 | 48 | ○ | ○ |
| Experimental Example 2 | 12 | 96 | × | × |
| Experimental Example 3 | 18 | 96 | ○ | × |
| Experimental Example 4 | 24 | 48 | ○ | ○ |
| Experimental Example 5 | 24 | 92 | × | × |

As shown in Table 5, in the case of Composition E1 containing lignin and ethyl cellulose, a film was successfully formed in Experimental Examples 1, 3, and 4 wherein the composition had a number average molecular weight Mn of more than 30000. In the case of Composition E2 containing lignin and hemicellulose, a film was successfully formed in Experimental Examples 1 and 4 wherein the composition had a number average molecular weight Mn of more than 50000.

Conclusion

As shown in Tables 1 to 5 and illustrated in FIGS. 1 to 8, Compositions E1 and E2 of the present disclosure have a molecular weight equivalent to that of the commercially available ethyl cellulose and, besides, exhibit excellent thermal properties. In addition, Composition E3 of the present disclosure was confirmed to have a surface activity higher than that of the commercially available methyl cellulose. From these evaluation results, the superiority of the present disclosure is clear.

**Claims**

1. A composition containing a lignocellulose derivative, the composition comprising:

   a cellulose derivative in which some or all of hydroxyl groups in cellulose are etherified with an alkyl group having 2 or more carbons;
   and/or
   at least one of the group consisting of a compound containing lignin and a compound containing hemicellulose, wherein
   the compound containing lignin is lignin, or a lignin derivative in which some or all of hydroxyl groups in lignin are etherified with an alkyl group having 2 or more carbons, and
   the compound containing hemicellulose is hemicellulose, or a hemicellulose derivative in which some or all of hydroxyl groups in hemicellulose are etherified with an alkyl group having 2 or more carbons.

2. The composition containing a lignocellulose derivative according to claim 1, the composition comprising the compound containing lignin, wherein a proportion of the compound containing lignin in all constituent components is more than 0% and 50% or less.

3. The composition containing a lignocellulose derivative according to claim 1, the composition comprising the compound containing hemicellulose, wherein a proportion of the compound containing hemicellulose in all constituent components is from 65% to 95%.

4. The composition containing a lignocellulose derivative according to any one of claims 1 to 3, wherein the alkyl group is an ethyl group.

5. The composition containing a lignocellulose derivative according to any one of claims 1 to 4, wherein the composition containing a lignocellulose derivative has a number average molecular weight $Mn$ of 30000 or more and a weight average molecular weight $Mw$ of 60000 or more as measured by gel permeation chromatography.

6. The composition containing a lignocellulose derivative according to any one of claims 1 to 4, wherein the composition containing a lignocellulose derivative has a number average molecular weight $Mn$ of 50000 or more and a weight average molecular weight $Mw$ of 100000 or more as measured by gel permeation chromatography.

7. The composition containing a lignocellulose derivative according to any one of claims 1 to 6, wherein the composition containing a lignocellulose derivative has a molecular weight distribution $Mw/Mn$ of from 1.0 to 7.0 as measured by gel permeation chromatography.

8. The composition containing a lignocellulose derivative according to any one of claims 1 to 7, wherein the composition containing a lignocellulose derivative has a glass transition temperature of 120°C or lower as determined by differential scanning calorimetry.

9. The composition containing a lignocellulose derivative according to claim 1 or 2, wherein the composition containing a lignocellulose derivative has a melting point of 250°C or higher as determined by differential scanning calorimetry.

10. A composition containing a lignocellulose derivative, the composition comprising:

   a cellulose derivative in which some or all of hydroxyl groups in cellulose are etherified with an alkyl group having 2 or more carbons; and
   a compound containing lignin, wherein
   the compound containing lignin is lignin, or a lignin derivative in which some or all of hydroxyl groups in lignin are etherified with an alkyl group having 2 or more carbons, and
   the composition containing a lignocellulose derivative has:

      a number average molecular weight $Mn$ of from 30000 to 120000 and a weight average molecular weight $Mw$ of from 60000 to 400000 as measured by gel permeation chromatography, and
      a glass transition temperature of 120°C or lower and a melting point of 250°C or higher as determined by differential scanning calorimetry.

11. A composition containing a lignocellulose derivative, the composition comprising:

   a cellulose derivative in which some or all of hydroxyl groups in cellulose are etherified with an alkyl group having 2 or more carbons;
   a compound containing lignin; and
   a compound containing hemicellulose, wherein
   the compound containing lignin is lignin, or a lignin derivative in which some or all of hydroxyl groups in lignin are etherified with an alkyl group having 2 or more carbons,
   the compound containing hemicellulose is hemicellulose, or a hemicellulose derivative in which some or all of hydroxyl groups in hemicellulose are etherified with an alkyl group having 2 or more carbons, and
   the composition containing a lignocellulose derivative has:

      a number average molecular weight $Mn$ of from 50000 to 65000 and a weight average molecular weight $Mw$ of from 100000 to 300000 as measured by gel permeation chromatography, and
      a glass transition temperature of 120°C or lower as determined by differential scanning calorimetry.

**12.** A composition containing a lignocellulose derivative, the composition comprising a compound containing hemicellulose as a main component, wherein

the compound containing hemicellulose is hemicellulose, or a hemicellulose derivative in which some or all of hydroxyl groups in hemicellulose are etherified with an alkyl group having 2 or more carbons, and
the composition containing a lignocellulose derivative has:

a number average molecular weight Mn of from 2000 to 12000 and a weight average molecular weight Mw of from 2500 to 15000 as measured by gel permeation chromatography, and
a glass transition temperature of 100°C or lower as determined by differential scanning calorimetry.

**13.** A molded body formed from the composition containing a lignocellulose derivative described in any one of claims 1 to 11.

**14.** A method for producing the composition containing a lignocellulose derivative described in any one of claims 1 to 12, the method comprising:

subjecting a biomass as a raw material containing lignocellulose to an alkali treatment in a solvent at a temperature of from 30°C to 60°C for from 10 hours to 40 hours;
alkylating the lignocellulose by adding an alkylating agent to the alkali-treated biomass as a raw material and allowing reaction to proceed at a temperature of from 40°C to 55°C for from 30 hours to 120 hours; and
fractionating the alkylated lignocellulose, wherein
the alkylating agent is an alkyl halide having 2 or more carbons.

**15.** The method for producing the composition containing a lignocellulose derivative according to claim 14, wherein the alkylating agent is ethyl halide.

FIG. 1

FIG. 2

FIG. 3

FIG. 4

FIG. 5

# FIG. 6

FIG. 7

FIG. 8

## INTERNATIONAL SEARCH REPORT

| | International application No. |
|---|---|
| | **PCT/JP2021/041399** |

**A. CLASSIFICATION OF SUBJECT MATTER**

*C08L 97/02*(2006.01)i; *C08L 1/26*(2006.01)i; *C08L 5/14*(2006.01)i
FI: C08L97/02; C08L1/26; C08L5/14

According to International Patent Classification (IPC) or to both national classification and IPC

**B. FIELDS SEARCHED**

Minimum documentation searched (classification system followed by classification symbols)

C08L97/02; C08L1/26; C08L5/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-520692 A (LEAF SCIENCES PTY LTD) 27 July 2017 (2017-07-27) claims, paragraphs [0003], [0005], [0039] | 1-13 |
| Y | | 14-15 |
| Y | JP 2008-500426 A (DOW GLOBAL TECHNOLOGIES INC) 10 January 2008 (2008-01-10) claims | 14-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2021** | **18 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="5"><strong>INTERNATIONAL SEARCH REPORT</strong><br>Information on patent family members</td></tr>
<tr><td colspan="3"></td><td colspan="2">International application No.<br><strong>PCT/JP2021/041399</strong></td></tr>
</table>

| Patent document cited in search report | | | Publication date (day/month/year) | Patent family member(s) | Publication date (day/month/year) |
|---|---|---|---|---|---|
| JP | 2017-520692 | A | 27 July 2017 | US 2017/0211231 A1<br>claims, paragraphs [0003], [0005], [0062]<br>WO 2016/004481 A1<br>EP 3167113 A1<br>CN 106661834 A<br>KR 10-2017-0038830 A | |
| JP | 2008-500426 | A | 10 January 2008 | WO 2005/118649 A1<br>claims<br>US 2007/0179292 A1<br>CN 1961005 A<br>EP 1758938 A1<br>KR 10-2007-0017390 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008500426 T

**Non-patent literature cited in the description**

- *Green Chem.,* 2020, vol. 22, 2909-2928